# EUROPÄISCHE PATENTANMELDUNG

(11) **EP 3 290 457 A1**
(43) Veröffentlichungstag der Anmeldung: **07.03.2018**
(21) Anmeldenummer: 16186195.0
(22) Anmeldetag: 30.08.2016
(51) Int. Cl.: C08G 59/50, C08L 63/00, C04B 40/06

(54) **ZWEIKOMPONENTEN-MÖRTELMASSE UND IHRE VERWENDUNG**

(71) Anmelder: HILTI Aktiengesellschaft, 9494 Schaan (LI)
(72) Erfinder: Cakmak, Mesut, 81375 München (DE); Kumru, Memet-Emin, 86199 Augsburg (DE)
(74) Vertreter: Hilti Aktiengesellschaft Corporate Intellectual Property

(57) **Zusammenfassung**

Eine Zweikomponenten-Mörtelmasse umfasst mindestens eine Harzkomponente (A), die als härtbaren Bestandteil mindestens ein durch Additionsreaktion polymerisierbares Harz auf Epoxidbasis enthält und eine Härterkomponente (B), die ein Härtungsmittel für das Harz der Harzkomponente (A) enthält, dadurch gekennzeichnet, dass mindestens eine der Komponenten mindestens ein Siloxan enthält, welches mindestens einen funktionellen Rest aufweist, der zur Additionsreaktion an Epoxide befähigt ist, jedoch keine an ein Siliziumatom gebundene hydrolysierbare Gruppen aufweist, insbesondere keine Alkoxyreste.

## Beschreibung

Die Erfindung betrifft eine Zweikomponenten-Mörtelmasse mit mindestens einer Harzkomponente (A), die als härtbaren Bestandteil mindestens ein durch Additionsreaktion polymerisierbares Harz auf Epoxidbasis enthält und einer Härterkomponente (B), die ein Härtungsmittel für das Harz der Harzkomponente (A) enthält sowie einer in mindestens einer der Komponenten vorhanden Organosiliziumverbindung. Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in einen mineralischen Untergrund eingebracht sind.

Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht.

Das Tragverhalten der so befestigten Bauteile hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Es ist weiter bekannt, dass die mechanischen Eigenschaften der ausgehärteten Mörtelmasse wesentlich durch die Qualität der Bohrlochreinigung und der Feuchtigkeit des mineralischen Untergrunds beeinflusst wird. In feuchten und/oder nur schlecht von Bohrstaub gereinigten Bohrlöchern tritt eine erhebliche Leistungsabnahme ein, die sich in verringerten Lastwerten der ausgehärteten Mörtelmasse zeigt.

Die WO 2011/113533 A1 betrifft ein Befestigungsmörtelsystem zum Einmörteln von Verankerungsmitteln auf der Basis von ein oder mehreren härtenden Reaktivharzen auf Epoxidbasis in Löcher oder Spalten, welches ein oder mehrere Silane enthält, die gegebenenfalls zur Teilnahme an der Polymerisierung mit dem Reaktivharz auf Epoxidbasis befähigte reaktive Gruppen und in jedem Falle siliziumgebundene hydrolysierbare Gruppen aufweisen. Als siliziumgebundene hydrolysierbare Gruppen in den ein oder mehreren Silanen werden Halogen-, Ketoximat-, Amino-, Aminoxy-, Mercapto-, Acyloxy-, Aryloxy-, Aralkyloxy- und insbesondere Alkyloxygruppen verwendet.

Diese im Stand der Technik bekannten Mörtelmassen zeigen bereits eine Verbesserung der Lastwerte in feuchten Bohrlöchern. Jedoch haben monomere Silane mit hydrolysierbaren und insbesondere siliziumgebundenen Gruppen den Nachteil, dass sie bei der Hydrolyse während der Verwendung enorme Mengen an flüchtigen organischen Verbindungen (VOC), beispielsweise Alkohole, freisetzen.

Um den Anteil an während der Aushärtung entstehenden VOCs zu verringern, offenbart die DE 10 2015 109 125 A1 eine Härterzusammensetzung für ein durch Additionspolymerisation härtbares Kunstmörtelsystem zum Einmörteln von Verankerungsmitteln in Löcher oder Spalten, wobei die Härterzusammensetzung oligomere Siloxane beinhaltet, die im Durchschnitt pro Molekül mindestens einen organischen Rest aufweisen. Der organische Rest trägt eine oder mehrere bei der Additionsreaktion mit Isocyanat- oder Epoxygruppen reaktive sekundäre und/oder primäre Amino- und/oder Thiolgruppen. Ferner weisen die Siloxane noch ein oder mehr hydrolysierbare, an Silizium gebundene Gruppen auf. Die Härterzusammensetzung kann daneben ein oder mehrere weitere übliche Zusätze beinhalten. Die beschriebenen Siloxanoligomere leiten sich aus Strukturelementen der Alkoxysilane ab und besitzen daher immer noch hydrolylsierbare Gruppen, welche bei der Hydrolyse VOCs, insbesondere in Form von Alkoholen, freisetzen. Der Anteil an VOCs kann durch die Oligomerisierung gemäß der DE 10 2015 109 125 A1 um bis zu 50% verringert werden.

Gegenüber dem bekannten Stand der Technik besteht somit weiter Bedarf an Zweikomponenten-Mörtelmassen mit guter Haftung in trockenen und feuchten Bohrlöchern, die einfach zu verarbeiten sind und bei denen die Bildung von VOCs während der Verarbeitung weiter verringert oder ganz vermieden werden kann.

Diese Aufgabe wird durch eine Zweikomponenten-Mörtelmasse gemäß nachstehendem Anspruch 1 gelöst.

Bevorzugte Ausführungsformen der erfindungsgemäßen Mörtelmasse sind in den Unteransprüchen angegeben, die wahlweise miteinander kombiniert werden können.

Gegenstand der Erfindung ist ferner die Verwendung der Masse zur chemischen Befestigung von Bauteilen wie Ankergewindestangen, Bewehrungseisen, Gewindehülsen und Schrauben in Bohrlöchern, die in mineralischem Untergrund, vorzugsweise Beton, vorliegen.

In ihrer allgemeinen Form umfasst die Erfindung eine Zweikomponenten-Mörtelmasse mit mindestens einer Harzkomponente (A), die als härtbaren Bestandteil mindestens ein durch Additionsreaktion polymerisierbares Harz auf Epoxidbasis enthält, und einer Härterkomponente (B), die ein Härtungsmittel für das Harz der Harzkomponente (A) enthält. Die Mörtelmasse ist dadurch gekennzeichnet, dass mindestens eine der Komponenten mindestens ein Siloxan enthält, welches mindestens einen funktionellen Rest aufweist, der zur Additionsreaktion an Epoxide befähigt ist, jedoch keine an ein Siliziumatom gebundene hydrolysierbare Gruppen aufweist, insbesondere keine Alkoxyreste.

Die erfindungsgemäße Zweikomponenten-Mörtelmasse enthält bevorzugt keine Siloxane, mit siliziumgebundenen hydrolysierbaren Gruppen. Unter siliziumgebundenen hydrolysierbaren Gruppen sind Reste wie beispielsweise Halogenatome, Ketoximat-, Amino-, Aminoxy-, Mercapto-, Acyloxy-, Aryloxy-, Aralkyloxy- (= Arylalkoxy-) oder insbesondere Alkyloxy- (Alkoxy-) Reste zu verstehen, die über ein Heteroatom an ein Siliziumatom gebunden sind.

Im Sinne der vorliegenden Erfindung werden unter Siloxanen aus Siloxaneinheiten aufgebaute chemische Verbindungen verstanden. In diesen Siloxaneinheiten sind die Siliziumatome, die durch das Ausbilden von Bindungen zu Sauerstoff ihr Oktett (Elektronenschale) nicht erreichen, mit organischen Resten abgesättigt. Im Gegensatz zu den (Poly)Silanen sind die Siliziumatome nicht untereinander, sondern durch genau ein Sauerstoffatom mit ihrem benachbarten Siliziumatom verknüpft: Si-O-Si.

Eine Siloxaneinheit kann ein bis vier weitere Substituenten aufweisen, je nach Anzahl der frei gebliebenen Valenzen am Sauerstoff: RₙSiO_{(4-n)/2} (n=0, 1, 2, 3), d.h. dass eine Siloxaneinheit ein bis vier weitere Substituenten aufweisen kann, je nach Anzahl der frei gebliebenen Valenzen am Sauerstoff. Die Siloxaneinheiten können also mono-, di-, tri- und tetrafunktionell sein, wobei üblicherweise folgende Abkürzungen verwendet werden: [M] = R₃SiO_{1/2}, [D] = R₂SiO_{2/2}, [T] = RSiO_{3/2} und [Q] = SiO_{4/2}.

Lineare (Poly)siloxane besitzen die Bauform [MDₙM], entsprechend der allgemeinen Formel R₃Si-[O-SiR₂]ₙ-O-SiR₃, wobei R Wasserstoffatome oder organische Gruppen, beispielsweise Alkylgruppen, sein können und n 0 oder eine ganze Zahl darstellt. Ein Beispiel für ein lineares Polysiloxan ist Poly(dimethylsiloxan.

Verzweigte Polysiloxane, die als verzweigende Elemente trifunktionelle oder tetrafunktionelle Siloxaneinheiten aufweisen, haben die Bauform [MₙDₘTₙ], wobei n und m ganze Zahlen bedeuten. Die Verzweigungsstelle sind dabei entweder in eine Kette oder einen Ring eingebaut. Zyklische Polysiloxane sind ringförmig aus difunktionellen Siloxaneinheiten aufgebaut, mit der Bauform [Dₙ], wobei n eine ganze Zahl größer oder gleich 3 bedeutet. Vernetzte Polysiloxane in dieser Gruppe sind ketten- oder ringförmige Moleküle, welche mit Hilfe von tri- und tetrafunktionellen Siloxaneinheiten zu planaren oder dreidimensionalen Netzwerken verknüpft sind.

Das Siloxangerüst kann verschiedene Kohlenwasserstoffreste beinhalten, und es können an Silizium gebundene funktionelle Gruppen und organofunktionelle Gruppen vorhanden sein. Bei den erfindungsgemäß eigesetzten Siloxanen sind jedoch keine siliziumfunktionellen Gruppen vorhanden. Mit funktionellen Gruppen oder Resten im Sinne der vorliegenden Erfindung sind daher immer organofunktionelle Reste gemeint, das heißt, an Kohlenstoff gebundene funktionelle Reste.

Die erfindungsgemäßen Siloxane machen den Einsatz von Silanen oder Siloxanen mit siliziumgebundenen hydrolysierbaren Resten überflüssig oder können die bekannten hydrosysierbaren Silane und Siloxane ganz oder teilweise ersetzen. Es wird vermutet, dass die erfindungsgemäß eingesetzten Siloxane die Mörteloberfläche ausreichend hydrophobisieren, um die Wasseraufnahme durch den Mörtel oder eine Diffusion von Härtern wie Aminen in die Wasserschicht an der Grenzfläche von Mörtel und Bohrloch zu reduzieren. Diese führt überraschenderweise zu einer guten Aushärtung der chemischen Mörtel auch an der Grenzfläche, trotz der Abwesenheit von siliziumgebundenen hydrolysierbaren Resten.

Mit den erfindungsgemäßen Siloxanen, die frei von hydrolysierbaren siliziumgebundenen Resten sind, ist sowohl in trockenem als auch in wassergesättigtem Beton für hammergebohrte und diamantgebohrte Bohrlöcher eine Verbesserung der Mörtelleistung unter kritischen Bohrlochbedingungen möglich, und zwar ohne die Bildung von unerwünschten VOCs. Die Befestigung von Bauteilen unter Verwendung der erfindungsgemäßen Zweikomponenten-Mörtelmasse ergibt sowohl bei trockenen gereinigten Bohrlöchern als auch bei halbgereinigten und/oder feuchten Bohrlöchern hohe Lastwerte, die gegenüber siloxanfreien oder zum Teil auch silanhaltigen Massen erhöht sind, ohne auf Silane oder Siloxanoligomere des Stands der Technik zurückzugreifen, welche die Umwelt durch Bildung von VOC's belasten.

In einer bevorzugten Ausführungsform enthält die Zweikomponenten-Mörtelmasse mindestens ein Siloxan, welches mindestens einen zur Additionsreaktion mit Epoxidgruppen befähigten funktionellen terminalen Rest aufweist. Weiter bevorzugt weist das Siloxan zwei oder mehr, gleiche oder verschiedene, besonders bevorzugt zwei gleiche endständige zur Additionsreaktion mit Epoxidgruppen befähigte funktionelle Reste auf. Durch die Funktionalisierung der erfindungsgemäßen Siloxane können diese fest in die Polymerstruktur eingebaut werden und gegebenenfalls auch als Härtungsmittel für das Harz dienen, wenn der funktionelle Rest beispielsweise eine Aminogruppe ist.

Bevorzugte zur Additionsreaktion mit Epoxidgruppen befähigte funktionelle Reste in einer der oben genannten Ausführungsformen der Erfindung sind aus der aus Hydroxy-, Carboxy-, Amino-, sek. Amino-, Mercapto-, Isocyanato-, Alkenyl-, (Meth)acryloyl-, Anhydrido- und Epoxid-Resten bestehenden Gruppe ausgewählt, bevorzugt aus der aus Epoxid- und Aminoresten bestehenden Gruppe.

In einer weiteren bevorzugten Ausführungsform der erfindungsgemäßen Zweikomponenten-Mörtelmasse weist das Siloxan die Struktur R₃Si-[O-Si(R¹)₂]ₙ-O-SiR₃ auf,
wobei n für 0 oder eine ganze Zahl von einschließlich 1 bis 1000 steht, bevorzugt für 0 oder 1 bis 5;
R und R¹ jeweils unabhängig voneinander für einen gegebenenfalls Heteroatome enthaltenden, gegebenenfalls substituierten und gegebenenfalls mindestens einen zur Additionsreaktion mit Epoxygruppen fähigen Rest aufweisenden C₁-C₂₀ -Alkylrest oder Aralkylrest steht. Bevorzugt steht R¹ für einen unsubstituierten C₁-C₄ -Alkylrest, insbesondere einen Methylrest.

Die Heteroatome sind bevorzugt Sauerstoffatome. Die Reste R und R¹ sind jeweils über ein Kohlenstoffatom an Silizium gebunden.

In dieser Ausführungsform weist das Siloxan bevorzugt einen und weiter bevorzugt zwei oder mehrere substituierte C₁-C₂₀ -Alkyl- oder Aralkylreste auf, wobei die Substituenten ausgewählt sind aus der aus Trialkylsilyl- (z.B. Trimethylsilyl-), Hydroxy-, Carboxy-, Amino-, sek. Amino-, Mercapto-, Isocyanato-, Alkenyl-, (Meth)acryloyl-, Anhydrido- und Epoxy-Resten bestehenden Gruppe, bevorzugt aus der aus Epoxy-, (Meth)acryloyl-, Trimethylsilyl- und Aminoresten bestehenden Gruppe und besonders bevorzugt aus der aus Epoxy-, und Aminoresten bestehenden Gruppe.

Insbesondere sind die Siloxane aus der aus 1,3-Bis(2-aminoethylaminoethyl)tetramethyldisiloxan, 1,3-Bis(glycidoxypropyl)tetramethyl-disiloxan, Tris(glycidoxypropyldimethylsiloxy)phenylsilan, 3-Methacryloxypropylpentamethyldisiloxan, Poly(acryloxypropylmethyl)siloxan, 1,3-Bis-[(acryloxypropylmethyl)siloxan, 1,3-Bis(3-methacryloxypropyl)tetrakis-(trimethylsiloxy)disiloxan, 1,3-Bis(3-methacryloxypropyl)tetramethyldisiloxan, Momomethacryloxypropyl-terminiertes Polydimethylsiloxan, Poly[dimethylsiloxan-co-(3-(monomethacryloxy)propyl)methylsiloxan], 1,3,-Bis(4-methacryloxybutyl)-tetramethyldisiloxan, (Methacryloxypropyl)methylsiloxan/Dimethylsiloxan Copolymer, Dodecamethylpentasiloxan, 1,1,1,3,5,7,7,7-Octamethyl-3,5-bis(trimethylsilanyloxy)tetrasiloxan, Trimethylsilyl-terminiertem Poly(methylhydro-siloxan), Bis(hydroxyalkyl)-terminiertem Poly(dimethylsiloxan), Poly[di-methylsiloxan-co-(2-(3,4-epoxycyclohexyl)ethyl)methylsiloxan], Diglycidylether-terminiertem Poly(dimethylsiloxan), Poy[dimethylsiloxan-co-[3-(2-(3-hydroxy-ethoxy)ethoxy)propyl]methylsiloxan und Monoglycidylether-terminiertem Poly(di-methylsiloxan) sowie Mischungen davon bestehenden Gruppe ausgewählt.

Besonders bevorzugte Beispiele sind 1,3-Bis(2-aminoethylaminoethyl)tetramethyldisiloxan, 1,3-Bis(glycidoxypropyl)tetramethyl-disiloxan und Tris(glycidoxypropyldimethylsiloxy)phenylsilan sowie Mischungen davon.

Unter einer "Zweikomponenten-Mörtelmasse" wird im Sinne der Erfindung eine Mörtelmasse verstanden, die aus einer härtbaren Harzkomponente und einer Härterkomponente für die Harzkomponente besteht, wobei die Harzkomponente und die Härterkomponente getrennt voneinander gelagert werden, sodass während der Lagerung keine Umsetzung der Härterkomponente mit der Harzkomponente erfolgt. Durch Vermischen der Härterkomponente mit dem Reaktivharz unmittelbar vor der Anwendung der Mörtelmasse wird die Aushärtung des Reaktivharzes gestartet.

Nachstehend genannte Gewichtsangaben verstehen sich als Gewichtsprozent in Bezug auf 100 Gewichtsprozent der Summe der Einzelkomponenten (Gesamtgewicht der Mörtelmasse), soweit nicht anders angegeben.

Die erfindungsgemäß eingesetzten Siloxane können einzeln oder als Gemisch vorliegen und bezogen auf das gesamte Zweikomponenten-mörtelystem, in einem Gewichtsanteil von 0,5 bis 10 Gew.-%, bevorzugt von 0,5 bis 8 Gew.-% und weiter bevorzugt von 1,5 bis 5 Gew.-%, vorgesehen sein.

Überraschenderweise wurde gefunden, dass bei schon bei geringen Siloxananteilen an den Mörtelmassen eine verbesserte Anhaftung des ausgehärteten Mörtels an der Betonoberfläche sowie verbesserte Lastwerte von eingegossenen, im Baubereich üblicherweise verwendeten Befestigungsmittel, wie beispielweise Dübel, Anker, Gewindeschrauben und Bolzen in feuchtem und trockenem Beton erreicht werden können.

Die in den erfindungsgemäßen Zweikomponentenmörtelsystemen enthaltene Harzkomponente auf Epoxidbasis beinhaltet mindestens eine Epoxidkomponente, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10. Die Epoxidkomponente kann wahlweise weiteren Glycidylether als Reaktivverdünner beinhalten. Bei den Epoxidharzen der Epoxidkomponente handelt es sich vorzugsweise um Polyglycidylether eines mindestens zweiwertigen Alkohols oder Phenols, wie Novolak, Bisphenol F oder Bis-phenol A, oder Gemische solcher Epoxide, die beispielsweise durch Umsetzung der entsprechenden mehrwertigen Alkohole mit Epichlorhydrin erhalten werden können. Geeignete Beispiele sind Hexandioldiglycidylether, Trimethylolpropan-triglycidylether, Novolak-Epoxidharze, Bisphenol-A-Epichlorhydrinharze und/oder Bisphenol-F-Epichlorhydrinharze, beispielsweise mit einem durchschnittlichen Molekulargewicht von Mₙ ≤ 2000 g/mol. Die Epoxidharze können beispielsweise ein Epoxidäquivalent von 120 bis 2000, vorzugsweise 150 bis 400, wie insbesondere 155 bis 195, beispielsweise 165 bis 185 aufweisen.

Bestimmte der oben genannten Epoxidverbindungen, wie Trimethylolpropantriglycidylether oder Hexandioldiglycidylether, die eine geringere Viskosität als aromatische Gruppen enthaltende Epoxide aufweisen, können auch als reaktive Verdünner eingesetzt werden.

Der Anteil der Epoxidkomponente an der Gesamtmasse des Zweikomponentensystems beträgt vorzugsweise 5 bis 90 Gew.-%, insbesondere 20 bis 80 Gew.-%, 30 bis 70 Gew.-% oder 40 bis 60 Gew.-%. Möglich sind auch Gemische von zwei oder mehr Epoxid-Komponenten. Geeignete Epoxidharze, Reaktivverdünner und Härter sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Beispiele für weitere Bestandteile der Harzkomponente (A) sind Beschleuniger, Thixotropiermittel, Füllstoffe und weitere Additive sowie deren Mischungen.

Als Beschleuniger können beispielsweise tertiäre Amine, Imidazole oder tertiäre Aminophenole wie Tris-2,4,6-dimethylaminomethylphenol, Organophosphine, Lewis-Basen oder -Säuren wie Phosphorsäureester, oder Gemische von zwei oder mehr davon verwendet werden. Die Beschleuniger können in einer oder beiden Komponenten, bevorzugt in der Härterkomponente (B), beinhaltet sein. Bevorzugt sind die Beschleuniger in der Härterkomponente in einem Gewichtsanteil von 0,001 bis 15 Gew.-% enthalten.

In einer bevorzugten Ausführungsform enthält die Zweikomponenten-Mörtelmasse in der Harzkomponente (A) und/oder in der Härterkomponente (B) mindestens ein Thixotropiermittel. Als Thixotropiermittel können übliche Rheologiehilfsmittel verwendet werden, wie gefällte oder pyrogene Kieselsäure, Bentonite, Cellulosen und/oder Kaolin. Die Thixotropiermittel können z.B. in einem Gewichtsanteil von 0,5 bis 30 Gew.-% zugesetzt werden, vorzugsweise von 2 bis 20 Gew.-%, bezogen auf das Gesamtgewicht der Mörtelmasse.

Schließlich kann die erfindungsgemäße Zweikomponenten-Mörtelmasse in der Harzkomponente (A) und/oder in der Härterkomponente (B) mindestens einen anorganischen Füllstoff enthalten. Als Füllstoffe dienen insbesondere Zemente wie Portlandzement oder Tonerdeszement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Die Füllstoffe können in einer oder in beiden Komponenten des Zweikomponentensystems vorhanden sein. Der Anteil an Füllstoffen beträgt vorzugsweise 0 bis 90 Gew.-%, beispielsweise 10 bis 90 Gew.-%, bevorzugt 15 bis 75 Gew.-% und weiter bevorzugt 20 bis 50 Gew.-%, bezogen auf das Gesamtgewicht der Mörtelmasse.

Ferner können auch weitere Additive zugesetzt werden, wie Weichmacher, nicht reaktive Verdünnungsmittel, Flexibilisatoren, Stabilisatoren, Rheologiehilfsmittel, Netzmittel, färbende Zusätze, wie Farbstoffe oder Pigmente, beispielsweise zum unterschiedlichen Anfärben der Komponenten zur besseren Kontrolle der Durchmischung, sowie Gemische der genannten Additive. Derartige weitere Additive können vorzugsweise in Gewichtsanteilen von insgesamt 0 bis 40 % zugesetzt sein, bezogen auf das Gesamtgewicht der Mörtelmasse.

Das Härtungsmittel der Härterkkomponente (B) umfasst mindestens eine zur Epoxidhärtung gebräuchliche Verbindung. Bei den zur Epoxidhärtung gebräuchlichen Verbindungen, die als Reaktionspartner bei der Polyaddition dienen, handelt es sich insbesondere um Verbindungen mit zwei oder mehr funktionellen Gruppen, die aus der aus Amino, Imino, und Mercapto sowie Kombinationen davon bestehenden Gruppe ausgewählt sind. Geeignete Beispiele sind Amine, Thiole, Aminothiole und Gemische davon, beispielsweise wie in Michael Dornbusch, Ulrich Christ und Rob Rasing, "Epoxidharze", Vincentz Network GmbH & Co KG (2015), ISBN 13: 9783866308770 genannt, welches hier diesbezüglich durch Bezugnahme aufgenommen wird. Besonders bevorzugte Härtungsmittel sind die darin genannten Di- oder Polyamine und/oder Di- oder Polythiole.

Es können auch Mischungen von zwei oder mehr der genannten zur Epoxidhärtung gebräuchlichen Verbindungen verwendet werden bzw. beinhaltet sein.

Die zur Epoxidhärtung gebräuchlichen Verbindungen liegen vorzugsweise in Mengen von bis zu 50 Gew.-%, vorzugsweise von 5 bis 30 Gew.-%, insbesondere 10 bis 20 Gew.-% vor, bezogen auf die Gesamtmasse des Zweikomponentenmörtelsystems.

Bezogen auf das Gewicht der Härterkomponente (B) kann der Anteil der Härtungsmittel bei 1 bis 100 Gew.-% liegen, beispielsweise bei 3 bis 95 Gew.- %, bevorzugt 4 bis 95 Gew.-%, weiter bevorzugt 5 bis 90 Gew.-% und besonders bevorzugt 10 bis 80 Gew.-%.

Weitere Bestandteile der Härterkomponente (B) des erfindungsgemäßen Zweikomponentensystems können organische Lösungsmittel wie Benzylalkohol, Füllstoffe wie die oben für die Harzkomponente (A) genannten Füllstoffe und weitere der oben genannten Additive umfassen.

Die erfindungsgemäße Zweikomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Harzkomponente (A) und die Härterkomponente (B) der Mörtelmasse reaktionsinhibierend voneinander getrennt angeordnet sind.

Die erfindungsgemäßen Zweikomponenten-Mörtelmassen können vorteilhaft die nachfolgende Gesamtzusammensetzung aus Harzkomponente (A) und Härterkomponente (B) aufweisen:
härtbares Epoxidharz in einem Anteil von 30 - 60 Gew.-%,
wenigstens ein Siloxan in einem Anteil von 0,5 - 10 Gew.-%,
Thixotropiermittel in einem Anteil von 0 - 5,0 Gew.-%,
anorganische Füllstoffe in einem Anteil von 20 - 80 Gew.-%,
Härtungsmittel für Epoxide in einem Anteil von 10 bis 20 Gew.-%, und
weitere Additive in einem Anteil von 0 bis 40 Gew.-%,
wobei die Summe der Gewichtsprozente 100 ergibt.

Das wenigstens eine Siloxan weist erfindungsgemäß mindestens einen funktionellen Rest auf, der zur Additionsreaktion an Epoxide befähigt ist, jedoch keine an ein Siliziumatom gebundene hydrolysierbare Gruppen, insbesondere keine Alkoxyreste.

Zur bestimmungsgemäßen Anwendung werden die Harzkomponente (A) und die Härterkomponente (B) aus den getrennten Kammern entleert und in einer geeigneten Vorrichtung, beispielsweise einem Statikmischer oder einem Dissolver, gemischt. Die Mischung aus Harzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Das Härtungsmittel der Härterkomponente (B) reagiert mit den Epoxiden der Harzkomponente (A) unter Polyaddition, sodass die Mörtelmasse unter Umgebungsbedingungen innerhalb weniger Stunden aushärtet.

Die erfindungsgemäße Zweikomponenten-Mörtelmasse zeigt eine verbesserte Haftung insbesondere an feuchtem Beton. Des Weiteren werden hohe Lastwerte auch bei feuchten Bohrlöchern und/oder bei schlechter Reinigung der in den mineralischen Untergrund eingebrachten Bohrlöcher erreicht. Es hat sich überraschenderweise gezeigt, dass die verbesserte Haftung sowie erhöhte Lastwerte auch ohne die Verwendung von hydrolysierbaren Silanen oder Siloxanoligomeren erreicht werden können. Es kann nur vermutet werden, dass der erfindungsgemäße Austausch von herkömmlichen Silanen mit hydrolysierbaren siliziumgebundenen Gruppen durch Siloxane mit lediglich organofunktinellen Resten zu einer ausreichenden Hydrophobisierung der Mörteloberfläche führt, welche die Wasseraufnahme durch den Mörtel oder die Diffusion von Härtern wie Aminen in die Wasserschicht an der Grenzfläche von Mörtel und Bohrloch derart reduziert, dass eine gute Aushärtung der chemischen Mörtel auch an der Grenzfläche stattfindet. Gleichzeitig ist die Entwicklung von flüchtigen organischen Bestandteilen während der Aushärtung der Mörtelmasse und somit die Umweltbelastung erheblich vermindert.

Gegenstand der Erfindung ist daher auch die Verwendung der erfindungsgemäßen Zweikomponenten-Mörtelmasse zur chemischen Befestigung von Bauteilen, insbesondere Ankergewindestangen, Bewehrungseisen, Gewindehülsen und Schrauben, in Bohrlöchern, die in einem mineralischem Untergrund, vorzugsweise Beton, vorliegen.

Weitere Vorteile der Erfindung ergeben sich aus den folgenden Beispielen, die jedoch keiner Weise einschränkend zu verstehen sind.

### Herstellungsbeispiele

### Beispiele 1 bis 5

Man bereitet zunächst die Harzkomponente (A) durch Vermischen der in Tabelle 1 angegebenen Bestandteile, wobei die Bestandteile zunächst per Hand vorgerührt und dann in einem Speedmixer 10 Sekunden lang bei 1000 U/min, danach 20 Sekunden lang bei 2500 U/min und anschließend 15 Sekunden lang bei 1500 U/min gemischt werden.

Zur Herstellung der Härterkompoenente (B) werden die in Tabelle 2 angegebenen Bestandteile zusammengemischt, per Hand vorgerührt und dann im Speedmixer 10 Sekunden lang bei 1000 U/min, danach 20 Sekunden lang bei 2500 U/min und anschließend 15 Sekunden lang bei 1500 U/min gemischt.

Anschließend werden die Harzkomponente (A) und die Härterkomponente (B)_im berechneten Verhältnis zusammengeben, per Hand vorgerührt und anschließend im Speedmixer 10 Sekunden lang bei 1500 U/min gemischt. Das Mischungsverhältnis der Komponenten (A) und (B) betrug in den Beispielen 1 bis 5 etwa 3:1 (w/w).

Als Epoxidharz wurde in den Beispielen 1 bis 5 eine im Handel unter der Bezeichnung Epilox M884 (LEUNA-Harze GmbH) erhältliche Zusammensetzung verwendet. Der Aminhärter ist unter der Bezeichnung Beckopox SEH 2627 von der Fa. Allnex Belgium erhältlich.

Die in den Tabellen 1 und 2 verwendeten Abkürzungen der eingesetzten Siloxane haben folgende Bedeutung:
EPSilox1: 1,3-Bis(glycidoxypropyl)tetramethyldisiloxan
EPSilox2: Tris(glycidoxypropyldimethylsiloxy)phenylsilan
Amsilox: 1,3-Bis(3-aminopropyl)tetramethyldisiloxan

**Tabelle 1: Harzkomponente (A)**

| | Beispiel 1 (Vergleich) [Gew.-%] | Beispiel 2 [Gew.-%] | Beispiel 3 [Gew.-%] | Beispiel 4 [Gew.-%] | Beispiel 5 [Gew.-%] |
|---|---|---|---|---|---|
| Epoxidharz | 61,3 | 61,3 | 57,0 | 57,0 | 57,1 |
| Quarzmehl | 35,7 | 35,7 | 35,9 | 35,9 | 35,9 |
| Pyrogene Kieselsäure | 3,0 | 3,0 | 3,0 | 3,0 | 3,0 |
| EPSilox1 | | | 4,1 | 4,1 | |
| EPSilox2 | | | | | 4,0 |
| Summe | 100 | 100 | 100 | 100 | 100 |

**Tabelle 2: Härterkomponente (B)**

| | Beispiel 1 (Vergleich) [Gew.-%] | Beispiel 2 [Gew.-%] | Beispiel 3 [Gew.-%] | Beispiel 4 [Gew.-%] | Beispiel 5 [Gew.-%] |
|---|---|---|---|---|---|
| Aminhärter | 62,4 | 53,0 | 58,5 | 62,4 | 62,4 |
| Amsilox | | 10,3 | 4,2 | | |
| Pyrogene Kieselsäure | 4,0 | 4,0 | 4,0 | 4,0 | 4,0 |
| Quarzmehl | 13,6 | 13,2 | 13,5 | 13,6 | 13,6 |
| Tonerdezement | 20,0 | 19,5 | 19,8 | 20,0 | 20,0 |
| Summe | 100 | 100 | 100 | 100 | 100 |

### Beispiele 6 bis 10

Man bereitet zunächst die Harzkomponente (A) durch Vermischen der in Tabelle 3 angegebenen Bestandteile, wobei die Bestandteile zunächst per Hand vorgerührt und dann in einem Speedmixer 10 Sekunden lang bei 1000 U/min, danach 20 Sekunden lang bei 2500 U/min und anschließend 15 Sekunden lang bei 1500 U/min gemischt werden.

Zur Herstellung der Härterkomponente (B) werden die in Tabelle 4 angegebenen Bestandteile zusammengemischt, per Hand vorgerührt und dann im Speedmixer 10 Sekunden lang bei 1000 U/min, danach 20 Sekunden lang bei 2500 U/min und anschließend 15 Sekunden lang bei 1500 U/min gemischt.

Anschließend werden die Harzkomponente (A) und die Härterkomponente (B)_im berechneten Verhältnis zusammengeben, per Hand vorgerührt und anschließend im Speedmixer 10 Sekunden lang bei 1500 U/min gemischt. Das Mischungsverhältnis der Komponenten (A) und (B) betrug in den Beispielen 6 bis 10 etwa 3:1 (w/w).

Als Epoxidharz wurde in den Beispielen 6 bis 10 eine im Handel unter der Bezeichnung Araldite BY 20157 (Huntsman Advanced Materials) erhältliche Zusammensetzung verwendet. Der Aminhärter ist unter der Bezeichnung Aradur 30446 von Huntsman Advanced Materials erhältlich.

Die in den Tabellen 3 und 4 verwendeten Abkürzungen der eingesetzten Siliziumverbindungen folgende Bedeutung:
Dynasilan: (3-Glycidyloxypropyl)trimethoxysilan
EPSilox1: 1,3-Bis(glycidoxypropyl)tetramethyldisiloxan
EPSilox2: Tris(glycidoxypropyldimethylsiloxy)phenylsilan
Amsilox: 1,3-Bis(3-aminopropyl)tetramethyldisiloxan

**Tabelle 3: Harzkomponente (A)**

| | Beispiel 6 (Vergleich) [Gew.-%] | Beispiel 7 [Gew.-%] | Beispiel 8 [Gew.-%] | Beispiel 9 [Gew.-%] | Beispiel 10 [Gew.-%] |
|---|---|---|---|---|---|
| Epoxidharz | 61,4 | 61,4 | 57,4 | 57,4 | 57,4 |
| Quarzmehl | 35,8 | 35,8 | 35,8 | 35,8 | 35,8 |
| Pyrogene Kieselsäure | 2,8 | 2,8 | 2,8 | 2,8 | 2,8 |
| EPSilox1 | | | 4,0 | 4,0 | |
| EPSilox2 | | | | | 4,0 |
| Summe | 100 | 100 | 100 | 100 | 100 |

**Tabelle 4: Härterkomponente (B)**

| | Beispiel 6 (Vergleich) [Gew.-%] | Beispiel 7 [Gew.-%] | Beispiel 8 [Gew.-%] | Beispiel 9 [Gew.-%] | Beispiel 10 [Gew.-%] |
|---|---|---|---|---|---|
| Aminhärter | 60,7 | 50,7 | 56,7 | 60,7 | 60,7 |
| Amsilox | | 10,0 | 4,0 | | |
| Pyrogene Kieselsäure | 4,3 | 4,3 | 4,3 | 4,3 | 4,3 |
| Quarzmehl | 19,5 | 19,5 | 19,5 | 19,5 | 19,5 |
| Tonerdezement | 13,0 | 13,0 | 13,0 | 13,0 | 13,0 |
| Beschleuniger | 2,5 | 2,5 | 2,5 | 2,5 | 2,5 |
| Summe | 100 | 100 | 100 | 100 | 100 |

### Beispiel 11

### Überprüfung der inneren Festigkeit durch Abzugstest

Als Untergrund wurde diamantgesägter Beton C20/25, jeweils feucht und trocken verwendet. Runde Metallplatten mit einem Ring aus doppelseitigem Klebeband als Abstandshalter werden auf dem zu verklebenden Untergrund befestigt und mit der Mörtelmasse gefüllt. Nach dem Aushärten bei Raumtemperatur (20°C), 1Tag) wird mit einem Haftprüfgerät (DYNA Z, Hersteller proceq) die Haftfestigkeit gemessen.

Die Ergebnisse sind der folgenden Tabelle 5 zu entnehmen:

**Tabelle 5: Haftfestigkeit im Abzugstest**

| Beispiele | Trockener Beton | | Feuchter Beton | |
|---|---|---|---|---|
| | 0 Pull off [N/mm2] | Änderung [%] | 0 Pull off [N/mm2] | Änderung [%] |
| 1 (Vergleich) | 3,7 | 0 | 0,7 | 0 |
| 2 | 5,3 | 43,2 | 2,3 | 228 |
| 3 | 5,1 | 37,8 | 2,5 | 257 |
| 4 | 5,1 | 37,8 | 2,7 | 285 |
| 5 | 4,6 | 12,4 | 2,3 | 2282 |
| | | | | |
| 6 (Vergleich) | 3,9 | 0 | 0,9 | 0 |
| 7 | 4,7 | 20,5 | 1,9 | 11,1 |
| 8 | 4,0 | 2,5 | 2,2 | 44,4 |
| 9 | 5,0 | 28,2 | 2,1 | 33,3 |
| 10 | 4,9 | 25,6 | 2,5 | 77,7 |

Wie aus den Testergebnissen ersichtlich ist, wird durch die Verwendung von Epoxy- bzw. Amino-funktionellen Siloxanen ohne siliziumgebundene hydrolysierbare Gruppen gegenüber den Vergleichsmassen ohne Epoxy- bzw. Amino-funktionelle Siloxane (Bespiele 1 und 6) die Haftfestigkeit der erfindungsgemäßen Mörtelmassen auf trockenem und insbesondere wassergesättigtem Beton verbessert und gleichzeitig die Bildung unerwünschter VOCs vermieden.

### Beispiel 12

### Bestimmung der Lastwerte in feuchtem Beton

Zur Bestimmung der mit Zweikomponenten-Mörtelmassen gemäß den Beispielen 6 bis 10 erzielten Lastwerte verwendet man eine hochfeste Ankergewindestange M12, die in ein Bohrloch mit einem Durchmesser von 14 mm und einer Bohrlochtiefe von 72 mm mit der erfindungsgemäßen Zweikomponenten-Mörtelmasse eingedübelt wird. Man ermittelt nach einer vorbestimmten Aushärtzeit bei Raumtemperatur die mittlere Versagenslast durch zentrisches Ausziehen der Ankergewindestange mit enger Abstützung und bestimmt die mittlere Versagenslast von fünf Ankern.

Die untersuchten Bohrlöcher wurden unter Verwendung eines Diamantbohrers präpariert, und das Bohrloch wurde mit zweimal mit Druckluft (6 bar) gereinigt, gebürstet und anschließend nochmals mit zweimal mit Druckluft ausgeblasen.

Zur Ermittlung der Lastwerte in feuchtem Beton wurden die Bohrlöcher mit Wasser gefüllt, wonach man das Wasser einen Tag lang einwirken ließ. Danach wurde das Wasser abgesaugt und die Ankerstange unter Verwendung der Mörtelmasse gesetzt. Die Aushärtung der Mörtelmasse erfolgte bei Raumtemperatur (21 ± 2 °C) während 24 Stunden.

Die für die Beispiele 6 bis 10 ermittelten Lastwerte sind in der folgenden Tabelle 6 angegeben.

**Tabelle 6: Lastwerte in feuchtem Beton**

| Beispiele | Versagenslast [N/mm²] | Änderung [%] |
|---|---|---|
| 6 (Vergleich) | 27,9 | 0 |
| 7 | 32,5 | 16,5 |
| 8 | 32,7 | 17,2 |
| 9 | 33,3 | 19,3 |
| 10 | 33,3 | 19,3 |

Die Testergebnisse zeigen eine deutliche Verbesserung der Mörtel-Leistung unter kritischen Bohrlochbedingungen für die erfindungsgemäßen Mörtelmassen. Weitere Versuche ergeben, dass die Verbesserung der Lastwerte unter den angegebenen Bedingungen auch für Mörtelmassen erreicht wird, die zwischen 1,5 Gewichtsprozent und 4 Gewichtsprozent der Siloxane ohne siliziumgebundene hydrolysierbare Gruppen enthalten.

## Patentansprüche

1. Zweikomponenten-Mörtelmasse mit mindestens einer Harzkomponente (A), die als härtbaren Bestandteil mindestens ein durch Additionsreaktion polymerisierbares Harz auf Epoxidbasis enthält, und einer Härterkomponente (B), die ein Härtungsmittel für das Harz der Harzkomponente (A) enthält, **dadurch gekennzeichnet, dass** mindestens eine der Komponenten mindestens ein Siloxan enthält, welches mindestens einen funktionellen Rest aufweist, der zur Additionsreaktion an Epoxide befähigt ist, jedoch keine an ein Siliziumatom gebundene hydrolysierbare Gruppen aufweist.

2. Zweikomponenten-Mörtelmasse nach Anspruch 1, wobei der zur Additionsreaktion mit Epoxidgruppen befähigte funktionelle Rest ein terminaler Rest ist.

3. Zweikomponenten-Mörtelmasse nach Anspruch 2, wobei der funktionelle Rest ausgewählt ist aus der aus Hydroxy-, Carboxy-, Amino-, sek. Amino-, Mercapto-, Isocyanato-, Alkenyl-, (Meth)acryloyl-, Anhydrido- und Epoxy-Resten bestehenden Gruppe, bevorzugt aus der aus Epoxy- und Aminoresten bestehenden Gruppe.

4. Zweikomponenten-Mörtelmasse nach einem der vorangehenden Ansprüche, wobei das Siloxan die Struktur R₃Si-[O-Si(R¹)₂]ₙ-O-SiR₃ aufweist,
wobei n für 0 oder eine ganze Zahl von einschließlich 1 bis 1000 steht, bevorzugt für 0 bis 100, weiter bevorzugt für 0 oder 1 bis 15,
R und R¹ jeweils unabhängig voneinander für einen gegebenenfalls Heteroatome enthaltenden und gegebenenfalls mindestens einen zur Additionsreaktion mit Epoxiden fähigen Rest aufweisenden C₁-C₂₀-Alkylrest oder -Aralkylrest steht, wobei R¹ vorzugsweise ausgewählt ist aus der aus C₁-C₄ -Alkylresten bestehenden Gruppe.

5. Zweikomponenten-Mörtelmasse nach einem der vorangehenden Ansprüche 2 bis 4, wobei das Siloxan zwei oder mehr, gleiche oder verschiedene, bevorzugt zwei gleiche endständige, zur Additionsreaktion mit Epoxidgruppen befähigte funktionelle Reste aufweist, bevorzugt aus der aus Amino- und Epoxidresten bestehenden Gruppe ausgewählte Reste.

6. Zweikomponenten-Mörtelmasse nach Anspruch 1, wobei das Siloxan aus der aus 1,3-Bis(2-aminoethylaminoethyl)tetramethyldisiloxan, 1,3-Bis(glycidoxypropyl)tetramethyldisiloxan, Tris(glycidoxypropyldimethylsiloxy)-phenylsilan, 3-Methacryloxy-propylpentamethyldisiloxan, Poly(acryloxypropylmethyl)siloxan, 1,3-Bis-[(acryloxypropylmethyl)siloxan, 1,3-Bis(3-methacryl oxypropyl)tetrakis-(trimethylsiloxy)disiloxan, 1,3-Bis(3-methacryloxypropyl)tetramethyldisiloxan, Momomethacryloxypropyl-terminiertes Polydimethylsiloxan, Poly[dimethylsiloxan-co-(3-(monomethacryloxy)propyl)methylsiloxan], 1,3,-Bis(4-methacryloxybutyl)-tetramethyldisiloxan, (Methacryloxypropyl)methyl siloxan/Dimethylsiloxan Copolymer, Dodecamethylpentasiloxan, 1,1,1,3,5,7,7,7-Octamethyl-3,5-bis(trimethylsilanyloxy)tetrasiloxan, Trimethylsilyl-terminiertem Poly(methylhydro-siloxan), Bis(hydroxyalkyl)-terminiertem Poly(dimethylsiloxan), Poly[di-methylsiloxan-co-(2-(3,4-epoxycyclohexyl)ethyl)methylsiloxan], Diglycidylether-terminiertem Poly(dimethylsiloxan), Poy[dimethylsiloxan-co-[3-(2-(3-hydroxyethoxy)ethoxy)propyl]methylsiloxan und Monoglycidylether-terminiertem Poly(dimethylsiloxan), besonders bevorzugt aus der aus 1,3-Bis(2-aminoethylaminoethyl)tetramethyldisiloxan, 1,3-Bis(glycidoxypropyl)tetramethyldisiloxan und Tris(glycidoxypropyldimethylsiloxy)phenylsilan bestehenden Gruppe ausgewählt ist.

7. Zweikomponenten-Mörtelmasse nach einem der vorangehenden Ansprüche, **dadurch gekennzeichnet, dass** der Anteil des Siloxans von 0,5 bis 20 Gew.-% beträgt, bevorzugt von 1,5 bis 10 Gew.-% und weiter bevorzugt von 2 bis 5 Gew.-%, bezogen auf das Gesamtgewicht der Zweikomponenten-Mörtelmasse.

8. Mörtelmasse nach einem der vorangehenden Ansprüche, **dadurch gekennzeichnet, dass** die Harzkomponente (A) und/oder die Härterkomponente (B) als weiteren Bestandteil mindestens ein Thixotropiermittel enthält.

9. Mörtelmasse nach einem der vorangehenden Ansprüche, **dadurch gekennzeichnet, dass** die Harzkomponente (A) und/oder die Härterkomponente (B) als weiteren Bestandteil mindestens einen anorganischen Füllstoff enthält.

10. Mörtelmasse nach einem der vorangehenden Ansprüche, **dadurch gekennzeichnet, dass** die Masse in einer Patrone, einer Kartusche oder einem Folienbeutel vorliegt, wobei die Harzkomponente (A) und die Härterkomponente (B) in voneinander getrennten Kammern angeordnet sind.

11. Verwendung der Zweikomponenten-Mörtelmasse gemäß einem der vorangehenden Ansprüche zur chemischen Befestigung von Bauteilen wie Ankergewindestangen, Bewehrungseisen, Gewindehülsen und Schrauben, in Bohrlöchern, die in einem mineralischen Untergrund vorliegen.
